(19) Europäisches Patentamt
European Patent Office
Office européen des brevets

(11) EP 0 647 857 B1

(12) **EUROPÄISCHE PATENTSCHRIFT**

(45) Veröffentlichungstag und Bekanntmachung des Hinweises auf die Patenterteilung:
**12.08.1998 Patentblatt 1998/33**

(51) Int Cl.$^6$: **G01S 13/34**

(21) Anmeldenummer: **94115413.0**

(22) Anmeldetag: **30.09.1994**

(54) **Hochgenauer Radar-Entfernungsmesser**

High-precision range measurement radar

Radar à haute précision pour mesures de distance

(84) Benannte Vertragsstaaten:
**AT BE CH ES FR GB GR IT LI NL SE**

(30) Priorität: **06.10.1993 DE 4334079**

(43) Veröffentlichungstag der Anmeldung:
**12.04.1995 Patentblatt 1995/15**

(73) Patentinhaber: **Daimler-Benz Aerospace Aktiengesellschaft**
**81663 München (DE)**

(72) Erfinder:
• **Trummer, Günther**
  **D-91083 Baiersdorf (DE)**
• **Körber, Richard**
  **D-85640 Putzbrunn (DE)**

(56) Entgegenhaltungen:
**US-A- 5 191 337**

• **ELECTRONICS AND COMMUNICATION ENGINEERING JOURNAL, Bd.2, Nr.5, Oktober 1990, LONDON GB Seiten 185 - 194, XP170943 H.D. GRIFFITHS 'New ideas in FM radar'**

## Beschreibung

Die Erfindung bezieht sich auf einen hochgenauen Radar-Entfernungsmesser, dessen Aufbau dem FMCW-Prinzip entspricht, gemäß dem Oberbegriff des Anspruchs 1.

Ein FMCW Radar-Entfernungsmesser ist aus dem Dokument US-A-5 191 337 bekannt.

Dieses Gerät wird neben anderen Einsatzbereichen bevorzugt in der Füllstandsmeßtechnik eingesetzt. Füllstandsmeßgeräte sind in den verschiedensten Ausführungsformen bekannt. Die Verfahren zur berührungslosen Füllstandsmessung basieren neben Radarverfahren,vorzugsweise auf der Laufzeitmessung im Ultraschallbereich oder im Laserbereich. Die Ultra- schallsensoren sind mit dem Nachteil behaftet, daß die Ausbreitungsgeschwindigkeit des Schalls sich mit dem Füllstandsmedium ändert und dadurch ganz erhebliche Meßfehler entstehen. Die Lasersensoren sind mit dem Nachteil behaftet, daß abgesehen vom hohen Anschaffungspreis der Füllstand bei klaren Flüssigkeiten in der Regel nicht erkennbar ist, denn der Laserstrahl wird nicht am Füllstand sondern am Behälterboden reflektiert. Diese Nachteile weisen die Radarsensoren nicht auf.

Die Anforderungen an einen Radarsensor sind, abgesehen von der verlangten hohen Zuverlässigkeit, die Messung der Füllstandshöhe mit einer Genauigkeit im cm-Bereich, die Einhaltung vorgeschriebener Frequenzbänder, wegen der FTZ-Zulassung durch die Post und weiterhin die Erfüllung der Schutzanforderungen der Physikalisch-Technischen Bundesanstalt, Gruppe 3.5 "Explosionsschutz elektrischer Betriebsmittel".

Um nun eine Messgenauigkeit im cm-Bereich zu erreichen, wird das Sendesignal entweder im Zeit- oder Frequenzbereich moduliert. Bei gepulsten Systemen sind hierzu extrem kurze Pulse entsprechend der Beziehung

$$\text{Meßgenauigkeit} = \text{Lichtgeschwindigkeit} * \text{Pulslänge}/2$$

erforderlich. Bei einer Meßgenauigkeit von z.B. 10 cm entspräche dies einer Pulslänge von 0.66 nsec. Dies ist bei der derzeit verfügbaren Technologie für industrielle Anwendungen nicht wirtschaftlich realisierbar.

Bei einer Frequenzmodulation des Sendesignals wird die Entfernungsauflösung durch den Frequenzhub (Auslenkung von der Mittenfrequenz) über die Gleichung

$$\text{Meßgenauigkeit} = \text{Lichtgeschwindigkeit} / (2 * \text{Frequenzhub})$$

bestimmt. Bei einer Meßgenauigkeit von z.B. 10 cm entspräche dies einem Frequenzhub von 1.5 GHz. Dies läßt sich unter wirtschaftlichen Gesichtspunkten für höhere Frequenzen realisieren, wobei die freigegebene Frequenz für diese Anwendung 24.125 GHz ist, jedoch die Forderung der Post auf eine Bandbegrenzung von 24.125 ± 125 MHz für die allgemeine FTZ-Zulassung nicht erfüllt. Hierbei wird der Frequenzhub von Messung zu Messung stufenweise, beginnend mit dem maximal zulässigen Hub (250 MHz) erniedrigt.

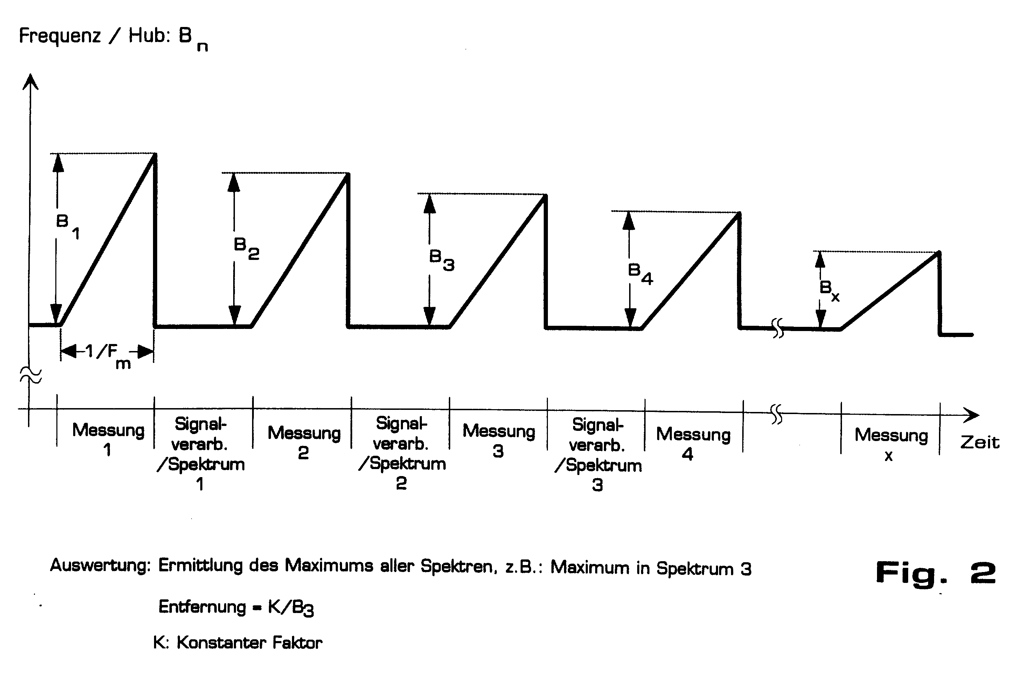

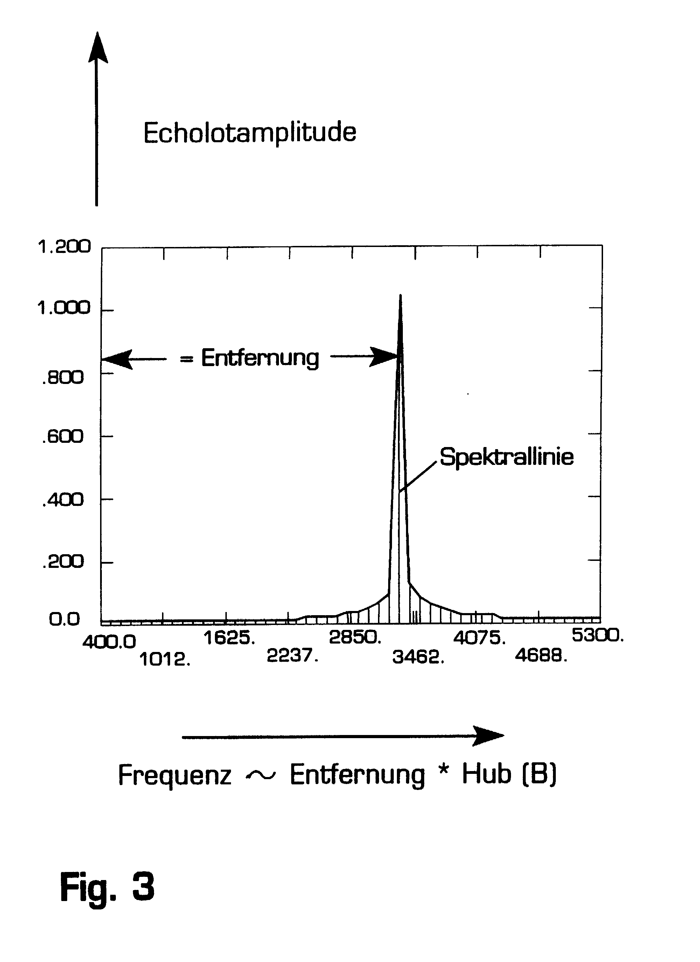

Das Verfahren zur Modulation ist in Fig. 2 skizziert. Zur Ermittlung des Abstandes zwischen Füllstand und Meßgerät wird eine Spektralanalyse des Empfangssignals mittels diskreter Fouriertransformation durchgeführt. Die Zusammenhänge sind in Fig. 3 dargestellt.

Besteht jedoch beispielsweise in geschlossenen Behältern die Forderung der allgemeinen Postzulassung für den Füllstandsmesser nicht, so können bei einem Hub von z.B. 1.5 GHz durch das vorbeschriebene Verfahren Genauigkeiten von einigen Millimetern erreicht werden.

Der vorliegenden Erfindung liegt die Aufgabe zugrunde, einen hochgenauen Radar-Füllstandsmesser aufzuzeigen, der nach dem FMCW-Prinzip mit digitaler Signalverarbeitung zur hochgenauen Entfernungsmessung bei begrenztem Frequenzhub arbeitet.

Diese Aufgabe wird durch die im Anspruch 1 angegebenen Maßnahmen gelöst. In den Unteransprüchen sind Ausgestaltungen und Weiterbildungen aufgezeigt und in der nachfolgenden Beschreibung ist ein Ausführungsbeispiel erläutert, wobei die Figuren der Zeichnung diese Erläuterungen ergänzen. Es zeigen:

Fig. 1    eine Ansicht einer Füllstandsmessung durch einen Radar-Füllstandsmesser,

Fig. 2    ein Frequenz/Hub-Zeit-Diagramm des Modulationsverfahrens,

Fig. 3    ein Diagramm zur Entfernungsbestimmung aus dem Spektrum des Empfangssignals,

Fig. 4    ein Schemabild einer diskreten Messung der Entfernung durch Entfernungstore,

Fig. 5    ein Diagramm zur Oberlagerung verschiedener Spektren bei unterschiedlichen Frequenzhüben ($B_X$),

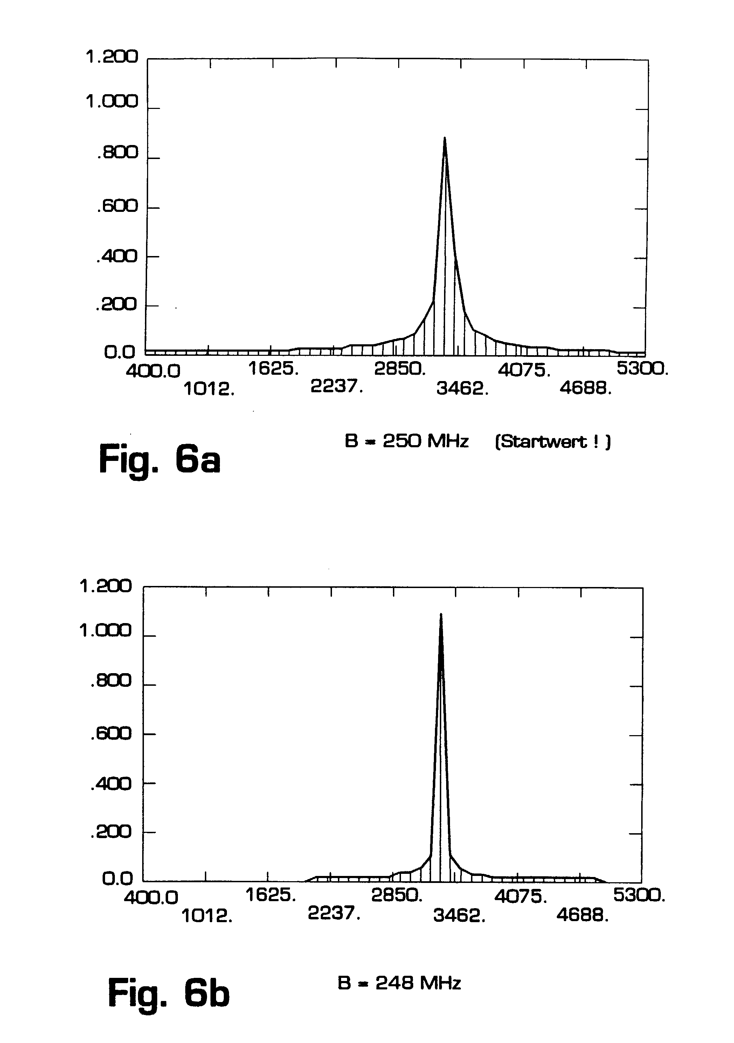

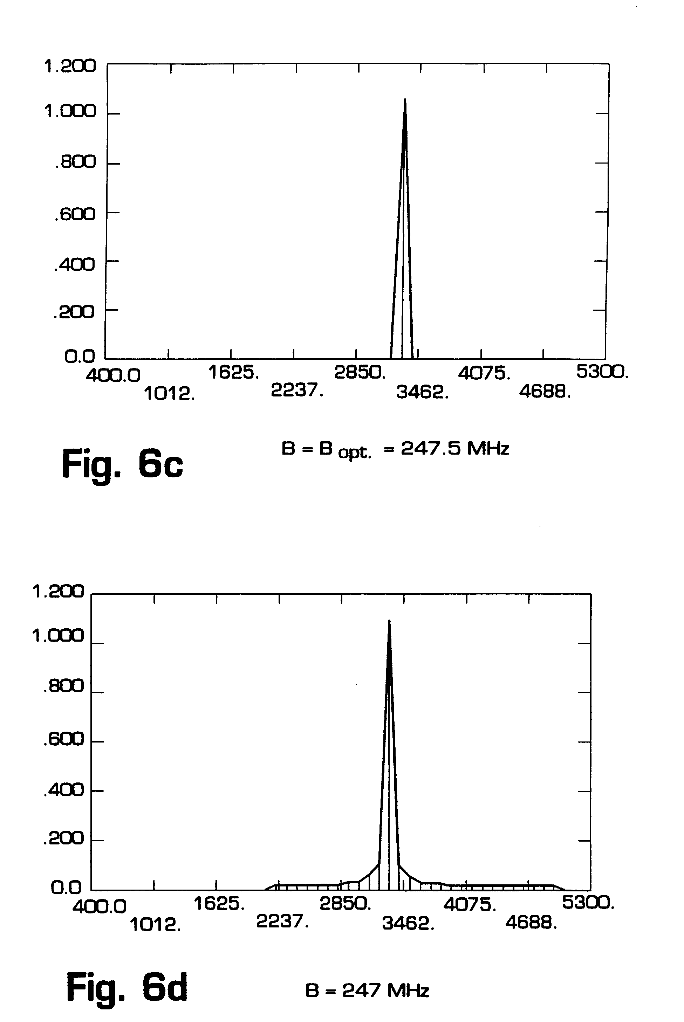

Fig. 6    Diagramme von Spektrum/Echoprofilen mit unterschiedlichen Frequenzhüben (B),

Fig. 7    ein Blockschaltbild eines Ausführungsbeispiels eines Radar-Füllstandsmessers.

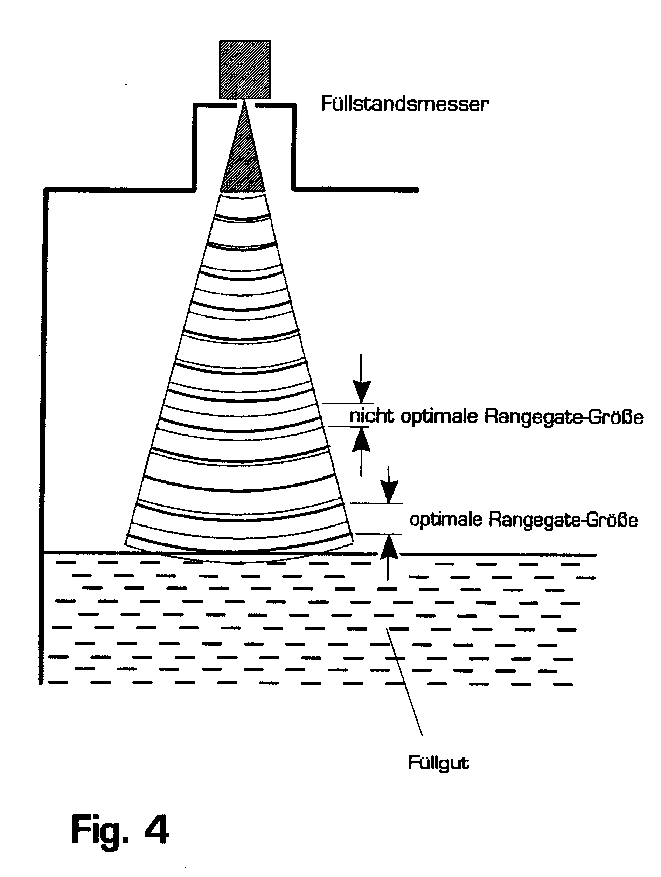

Die diskrete Fouriertransformation eines Zeitsignals zerlegt quasi den detektierten Bereich in sogenannte Entfernungstore - oder auch Range Gate genannt - wie es in Fig. 4 veranschaulicht ist, dabei entspricht jedes Entfernungstor einer Spektrallinie, wie in Flg. 3 gezeigt.

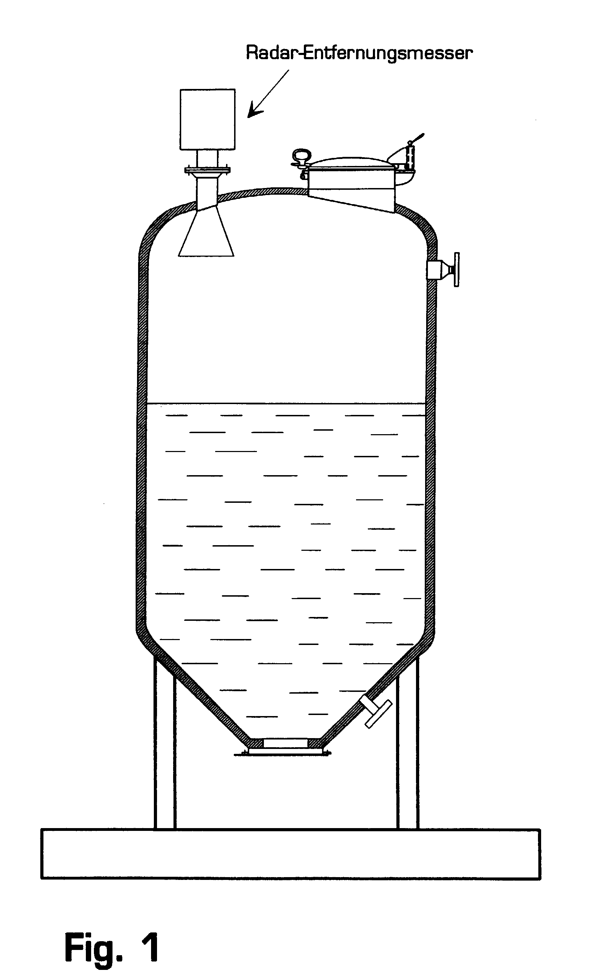

Im Falle einer Füllstandsmessung hat man es mit einem einzelnen dominanten "Reflektor" nämlich die Füllgut-Oberfläche - zu tun, wie dies aus Fig. 1 zu entnehmen ist. Alle anderen "Reflektoren", wie beispielsweise die Behälterwand etc., befinden sich nicht in der Hauptkeule der Antenne und machen sich deshalb im Empfangssignal nicht oder nur sehr schwach bemerkbar.

Für diesen Spezialfall wird nun folgendes Verfahren einer hochgenauen Entfernungsbestimmung vorgeschlagen:

Die Echoamplitude des empfangenen Signals wird genau dann maximal, wenn man ein geeignet großes Entfernungstor findet, so daß sich das Entfernungstor exakt n-mal zwischen dem Meßgerät und der Reflektoroberfläche legen läßt.

Das Detektlonsverfahren läuft nun wie folgt ab:

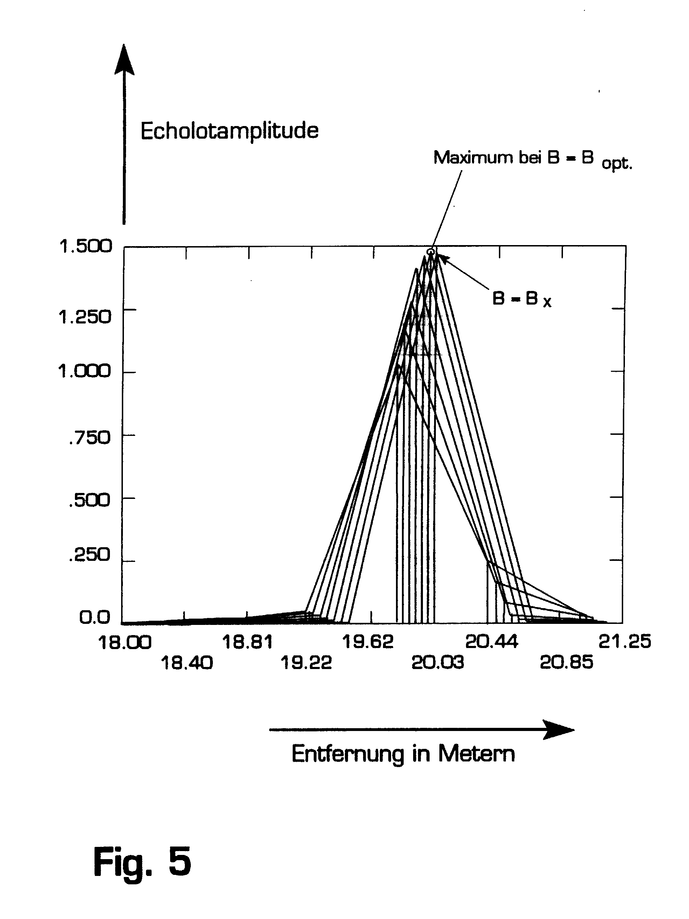

Es wird mit dem maximal zulässigen Hub von 250 MHz entsprechend einer Entfernungstor-Ausdehnung von 0,6 m begonnen. Das Gerät stellt zunächst grob die Entfernung fest. Abhängig von der ermittelten groben Entfernung wird anschließend der Berelch der Reduktion des Hubes sowie die Schrittweite von Meßzyklus zu Meßzyklus festgelegt. Dann wird der Hub von Messung zu Messung schrittweise verringert, bis daß die Entfernungstor-Ausdehnung exakt n-mal in die Entfernung zwischen Meßgerät und Füllstand paßt. Dies wird durch die Ermittlung des Maximalwertes im Spektrum der Meßreihe bestimmt (siehe Fig. 5), die Entfernungsberechnung erfolgt dann über die einfache Beziehung

$$R = Fb * c / ( 2 * B * Fm )$$

mit:

R =    Entfernung
Fb =    Beatfrequenz (entspr. der Position der Echoamplitude im Spektrum)
c =    Lichtgeschwindigkeit
B =    optimierter" Frequenzhub
Fm =    Modulationsfrequenz (siehe hierzu Fig. 2)

Die Bildsequenz 6a bis d zeigt, wie sich bei schrittweiser Optimierung des Hubes die Nebenlinien im Spektrum verringern. Die Signalenergle konzentriert sich also auf die Hauptlinie, so daß diese im Fall des optimierten Hubes "maximal" ist.

Bei diesem Verfahren wird also die Entfernungsgenauigkeit nicht mehr allein vom maximal möglichen Hub bestimmt, sondern vielmehr von der Genauigkeit, mit welcher der optimale Hub ermittelt wird. Dies ist in erster Linie von der gewählten Schrittweite - also von der maximal zulässigen Meßdauer - abhängig.

Weiterhin ist darauf zu achten, daß der Hub hochgenau einstellbar ist und eine möglichst lineare Frequenzmodulation stattfindet, damit die in den Flguren 6a bis d dargestellten Seitenlinien minimal werden, was durch das nachfolgend beschriebene Verfahren der Frequenzerzeugung ermöglicht wird.

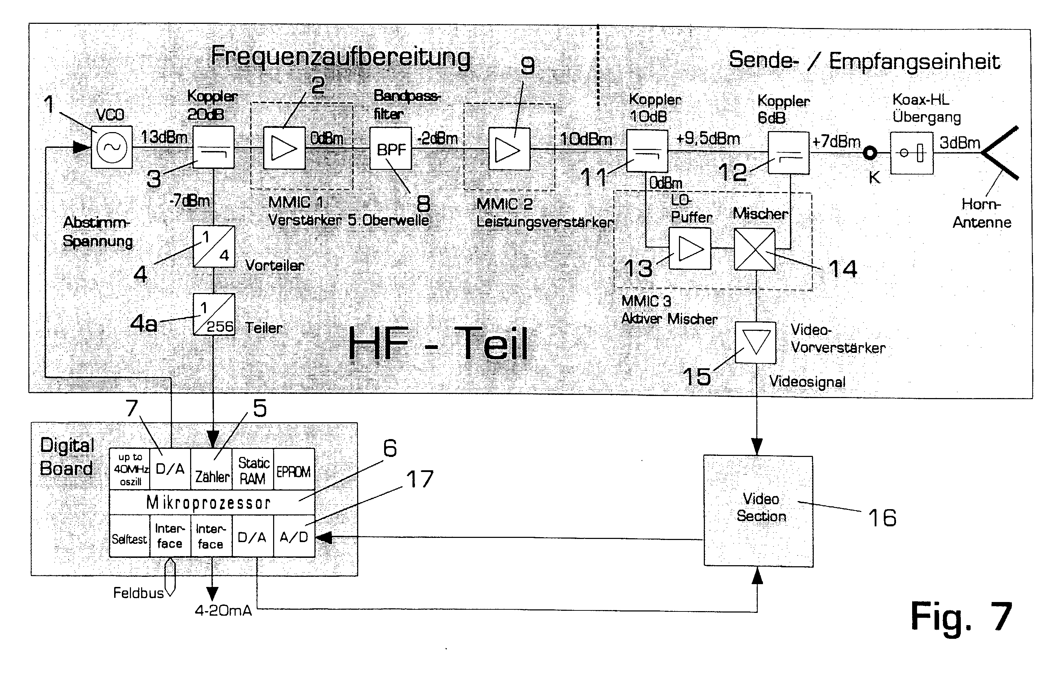

Wie in Fig. 7 veranschaulicht, erzeugt der spannungsgesteuerte Oszillator 1 (VCO) die Grundfrequenz von 4.825 GHz. Im anschließenden Pufferverstärker 2 wird dieses Oszillatorsignal verstärkt und gleichzeitig der Oszillator 1 von weiteren Stufen entkoppelt, um den sogenannten PullingEffekt zu vermeiden, welcher zu einer Abweichung von der Linearität des Frequenzhubes und somit zu einer Ungenauigkeit in der Entfernungsbestimmung führen würde.

Der Pufferverstärker 2 arbeitet im Sättigungsbetrieb und erzeugt so Frequenzanteile bei der Vielfachen der Grundfrequenz. Er ist so ausgelegt, daß die fünfte Oberwelle (24.125 GHz) besonders hervortritt. Der Richtkoppler 3 (20 dB) ist für die Grundwelle dimensioniert und koppelt das VCO-Slgnal zur Teilerkette 4, 4a mit geeignetem Pegel aus. Diese Teilerkette 4, 4a, die aus mehreren Teilerstufen besteht, setzt die Oszillatorfrequenz in dem MHz-Bereich um. Zur erforderlichen Linearisierung dieser Frequenz wird nun die Regelschleife über einen Zähler 5, einen Mikroprozessor 6 und einen D/A-Konverter 7 geschlossen. Diese Regelschlelfe ermöglicht über einen Autokalibrationszyklus sowohl Alterungseffekte der Bauteile als auch temperaturbedingte Langzeitdrifte der Frequenz des Oszillators 1 auszuregeln.

Mit dem Bandpaßfilter 8 wird die bereits bevorzugt erzeugte fünfte Oberwelle der Oszillator-Grundfrequenz von 24.125 GHz selektriert und alle anderen Vielfachen sowie die Grundwelle unterdrückt.

Im angeschlossenen Leistungsverstärker 9 wird der Pegel nochmals aufbereitet und zugleich eine weitere Entkopplung der Oszillatoreinheit von Lastimpedanzen erreicht.

Die Sende/Enpfangseinheit des hier vorgeschlagenen Radarfüllstandsmessers weist einen Richtkoppler 11 (lo dB) auf, der einen Teil des Sendesignals für den Empfänger abkoppelt. Sein Sendezweig-Hauptarm führt direkt zum 6 dB-Richtkoppler 12, der das Sende- und das Empfangssignal trennt. Im LO-Pufferverstärker 13 wird der ausgekoppelte Teil des Sendesignals im Pegel angehoben, um eine optimale Aussteuerung des Mischers 14 zu erreichen. Das Empfangssignal gelangt von der Antenne über den 6 dB-Koppler 12 in den Mischer 14, an dessen ZF-Ausgang durch sogenannte homodyne Frequenzumsetzung das Videosignal im Basisband entsteht (BeatSignal). Dieses Beat-Signal wird im anschließenden ZF-Verstärker 15 rauscharm verstärkt und gleichzeitig eine Entkopplung des Mischers 14 von den nachfolgenden Filtern und Verstärkerstufen des Video-Teils 16 bewirkt. Diese Video-Sektion dient im wesentlichen zur Pegel- und Frequenzaufbereitung für den A/D-Wandler 17 im Mikrocomputer 6, in dem die Steuerung des Gesamtsystems, die Signalverarbeitung und die Entfernungsbestimmung stattfindet.

## Patentansprüche

1. Radar-Entfernungsmesser, der nach dem FMCW-Prinzip konzipiert ist und im Frequenzbereich 24.125 GHz ± 125 MHz arbeitet, **dadurch gekennzeichnet,** daß durch eine schrittweise Ermittlung des optimalen Frequenzhubes eine hochgenaue Entfernungsbestimmung so durchgeführt wird, daB mit dem maximal zulässigen Hub die Entfernung grob bestimmt wird, anschließend sukzessive der Hub verkleinert wird bis eine ganzzahlige Vielfache der generierten Entfernungtore der exakten Distanz von Meßgerät zur Reflexionsoberfläche entspricht, wobei als Indikator für den optimalen Hub die Maximalamplitude des Spektrums der Meßsequenz dient - oder das Minimum der sogenannten Nebenllnlen im Spektrum - und eine Regelschleife, bestehend aus einem Oszillator (1), einem Richtkoppler (3), eine Teilerkette (4), einem Zähler (5), sowie einem Mikroprozessor (6) und einem D/A-Wandler (7) mit einer Frequenz gebildet wird, deren ganzzahlige Vlelfache die eigentliche Sendefrequenz ist.

2. Radar-Entfernungsmesser nach Anspruch 1, **dadurch gekennzeichnet,** daß eine Video-Einrichtung (16) mit einer Einrichtung zur Pegelaufbereitung mit vom Mikroprozessor (6) gesteuertem regelbaren Verstärker (2) und einer Einrichtung zur Bandpaßfilterung (8) verknüpft ist.

3. Radar-Entfernungsmesser nach Anspruch 2, **dadurch gekennzeichnet,** daß dem Oszillator (1) der Verstärker (2), der auf die Erzeugung der fünften Oberwelle optimiert ist, nachgeschaltet wird und ihm das Bandpaßfilter (8) für die fünfte Oberwelle der Oszillatorfrequenz und ein weiterer Verstärker (9) zur Pegelanhebung und Entkopplung zugeordnet ist.

4. Radar-Entfernungsmesser nach einem der Ansprüche 1 bis 3, **dadurch gekennzeichnet,** daß das Sendesignal durch einen Rlchtkoppler (12) vom Empfangssignal getrennt wird.

5. Radar-Entfernungsmesser nach einem der Ansprüche 1 bis 4, **dadurch gekennzeichnet,** daß der Empfänger L0-Pufferverstärker (13) und Mischer (14) aufweist, die in hochintegrierter Technik (Monolithic Microwave Integrated Circuit) gefertigt sind.

6. Radar-Entfernungsmesser nach einem de Ansprüche 1 bis 5, **dadurch gekennzeichnet,** daß zur Umsetzung der Oszillator-Frequenz in den MHz-Bereich die Teilerkette (4) mit mehreren Teilerstufen (4a) in der Regelschleife angeordnet ist, die einem Autokalibrationszyklus unterworfen ist.

## Claims

1. A radar range meter which is designed according to the FMCW principle and which operates in the frequency range of 24,125 GHz ± 125 MHz, **characterised in that** a high-accuracy range determination is made by a stepwise determination of the optimum frequency deviation, by making a rough determination of the range using the maximum permissible deviation and successively reducing the deviation until an integral multiple of the generated range gates corresponds to the exact distance from the meter to the reflecting surface, wherein the maximum amplitude of the spectrum of the measuring sequence - or the minimum of what are termed the secondary lines in the spectrum - serves as an indicator for the optimum deviation, and a control loop consisting of an oscillator (1), a directional coupler (3), a divisor chain (4), a counter (5) and of a microprocessor (6) and a D-A converter (7) is formed with a frequency, the integral multiple of which is the actual transmission frequency.

2. A radar range meter according to claim 1, **characterised in that** a video device (16) is linked to a device for the processing of the level, with an adjustable amplifier (2) controlled by the microprocessor (6) and a device for band-pass filtering (8).

3. A radar range meter according to claim 2, **characterised in that** the amplifier (2), which is optimised for the generation of the fifth harmonic, is connected downstream of the oscillator (1), and the band-pass filter (8) for the fifth harmonic of the oscillator frequency and a further amplifier (9) for increasing the level and for decoupling are associated with said amplifier.

4. A radar range meter according to any one of claims 1 to 3, **characterised in that** the transmitted signal is separated from the received signal by a directional coupler (12).

5. A radar range meter according to any one of claims 1 to 4, **characterised in that** the receiver comprises LO buffer amplifiers (13) and mixers (14) which are manufactured by large-scale integrated circuit technology (monolithic microwave integrated circuit).

6. A radar range meter according to any one of claims 1 to 5, **characterised in that** in order to convert the oscillator frequency into the MHz range the divisor chain (4) is disposed, with a plurality of divisor stages (4a), in the control loop, which is subjected to an auto-calibration cycle.

## Revendications

1. Dispositif de mesure de distance par radar fonctionnant selon le principe FMCW et travaillant dans la plage de fréquences 24.125 GHz ± 125 MHz, caractérisé par le fait qu'une détermination de distance de haute précision est effectuée par une définition pas à pas de l'excursion de fréquence optimale, de manière que la distance soit déterminée de façon approximative par l'excursion maximale admissible, l'excursion est ensuite réduite successivement jusqu'à ce qu'un multiple entier des portes de distance générées corresponde à la distance exacte entre l'appareil de mesure et la surface de réflexion, l'amplitude maximale du spectre de la séquence de mesure, ou le minimum des lignes secondaires dans le spectre, servant d'indicateur pour l'excursion optimale, et une boucle de régulation comprenant un oscillateur (1), un coupleur directif (3), une chaîne de diviseur (4), un compteur (5) ainsi qu'un microprocesseur (6) et un convertisseur numérique/analogique (7) est formée avec une fréquence dont le multiple entier constitue la fréquence d'émission proprement dite.

2. Dispositif de mesure de distance par radar suivant la revendication 1, caractérisé par le fait qu'un dispositif vidéo (16) est combiné avec un dispositif de traitement de niveau avec un amplificateur (2) réglable commandé par le microprocesseur (6) et un dispositif de filtrage passe-bande (8).

3. Dispositif de mesure de distance par radar suivant la revendication 2, caractérisé par le fait que l'oscillateur (1) est suivi de l'amplificateur (2) qui est optimisé à la production de la cinquième harmonique et qu'à cet oscillateur sont associés le filtre passe-bande (8) pour la cinquième harmonique de la fréquence de l'oscillateur et un oscillateur supplémentaire (9) pour l'élévation de niveau et le découplage.

4. Dispositif de mesure de distance par radar suivant l'une des revendications 1 à 3, caractérisé par le fait que le signal d'émission est séparé du signal de réception par un coupleur directif (12).

5. Dispositif de mesure de distance par radar suivant l'une des revendications 1 à 4, caractérisé par le fait que l'émetteur présente un amplificateur tampon LO (13) et un mélangeur (14) qui sont réalisés en technique d'intégration poussée (Monolithic Microwave Intergrated Circuit).

6. Dispositif de mesure de distance par radar suivant l'une des revendications 1 à 5, caractérisé par le fait qu'en vue de la conversion de la fréquence de l'oscillateur dans la plage MHz, la chaîne de diviseur (4) avec plusieurs étages de diviseur (4a) est disposée dans la boucle de régulation qui est soumise à un cycle d'auto-calibrage.

Radar-Entfernungsmesser

# Fig. 1

EP 0 647 857 B1

Frequenz / Hub: $B_n$

$B_1$  $1/F_m$  $B_2$  $B_3$  $B_4$  $B_x$

Zeit

| Messung 1 | Signal-verarb. /Spektrum 1 | Messung 2 | Signal-verarb. /Spektrum 2 | Messung 3 | Signal-verarb. /Spektrum 3 | Messung 4 | Messung x |

Auswertung: Ermittlung des Maximums aller Spektren, z.B.: Maximum in Spektrum 3

Entfernung = $K/B_3$

K: Konstanter Faktor

**Fig. 2**

7

Fig. 3

Füllstandsmesser

nicht optimale Rangegate-Größe

optimale Rangegate-Größe

Füllgut

# Fig. 4

**Fig. 5**

Fig. 6a    B = 250 MHz    (Startwert ! )

Fig. 6b    B = 248 MHz

Fig. 6c             B = B opt. = 247.5 MHz

Fig. 6d             B = 247 MHz

Fig. 7

EP 0 647 857 B1